(19) Europäisches Patentamt
European Patent Office
Office européen des brevets

(11) **EP 1 216 956 B1**

(12) **EUROPÄISCHE PATENTSCHRIFT**

(45) Veröffentlichungstag und Bekanntmachung des Hinweises auf die Patenterteilung:
**02.08.2006 Patentblatt 2006/31**

(51) Int Cl.:
*C01B 13/34* *(2006.01)*     *C01B 13/24* *(2006.01)*
*C01B 33/18* *(2006.01)*

(21) Anmeldenummer: **01125293.9**

(22) Anmeldetag: **25.10.2001**

(54) **Mit Kalium dotierte pyrogene Oxide**

Potassium doped pyrogenic oxide

Oxide pyrogénique dopé de potassium

(84) Benannte Vertragsstaaten:
**AT BE CH CY DE DK ES FI FR GB GR IE IT LI LU MC NL PT SE TR**

(30) Priorität: **23.12.2000 DE 10065028**

(43) Veröffentlichungstag der Anmeldung:
**26.06.2002 Patentblatt 2002/26**

(73) Patentinhaber: **Degussa AG**
**40474 Düsseldorf (DE)**

(72) Erfinder:
- **Mangold, Helmut, Dr.**
 **63517 Rodenbach (DE)**
- **Lortz, Wolfgang, Dr.**
 **63607 Wächtersbach (DE)**
- **Golchert, Rainer**
 **64807 Dieburg (DE)**
- **Roth, Helmut**
 **63814 Mainaschaff (DE)**

(56) Entgegenhaltungen:
**EP-A- 0 850 876**     **EP-A- 0 995 718**
**US-A- 4 297 143**

EP 1 216 956 B1

**Beschreibung**

Die Erfindung betrifft mittels Aerosol mit Kalium dotierte pyrogene Oxide, das Verfahren zu ihrer Herstellung und ihre Verwendung.

Die Dotierung von pyrogenen Oxiden mittels Aerosol wird in DE 196 50 500 beschrieben. Dort wird gezeigt wie in eine Flamme, in der ein pyrogenes Oxid durch Flammenhydrolyse erzeugt wird, zusätzlich ein Aerosol eingespeist wird.

In diesem Aerosol befindet sich ein Salz der zu dotierenden Verbindung(en)

Es wurde nun gefunden, daß bei der Verwendung von Kaliumsalzen als Dotierkomponente die Struktur, das heißt der Verwachsungsgrad und auch die Morphologie (das heißt das Erscheinungsbild) der Primärteilchen entscheidend verändert werden. Erfindungsgemäß setzt diese Veränderung der Morphologie bei einem Kaliumgehalt von mehr als 0,03 Gew.-% ein.

Gegenstand der Erfindung sind mittels Aerosol mit Kalium dotierte pyrogen hergestellte Oxide von Metallen oder Metalloiden, welche dadurch gekennzeichnet sind, daß die Basiskomponente ein pyrogen nach der Art der Flammenoxidation oder bevorzugt der Flammenhydrolyse hergestelltes Oxid ist, das mit Kalium von mehr als 0,03 bis 20 Gew.-% dotiert ist, wobei die Dotierungsmenge vorzugsweise im Bereich von 500 bis 20.000 ppm liegt und die Dotierungskomponente ein Salz des Kaliums ist, und die BET-Oberfläche des dotierten Oxids zwischen 1 und 1000 m2/g liegt und die Breite der Teilchengrößenverteilung windestens 0,7 beträgt.

Die Breite der Teilchengrößenverteilung ist definiert als der Quotient $d_n/d_a$, mit $d_n$ als arithmetischer Teilchendurchmesser und $d_a$ der gemittelte Teilchendurchmesser über die Oberfläche. Beträgt der Quotient $d_u/d_a$ den Wert 1, liegt eine monodisperse Verteilung vor. D.h. je näher der Wert an 1 liegt, umso enger ist die Teilchengrößenverteilung.

Die enge Teilchengrößenverteilung, definiert durch den Wert $d_n/d_a$ sorgt dafür, daß bei den chemisch-mechanischen Polieren keine Kratzer durch große Teilchen hervorgerufen werden.

Die durchschnittliche Teilchengröße kann kleiner 100 nanometer betragen und die Breite der Teilchengrößenverteilung beträgt mindestens 0,7.

Das Oxid kann bevorzugt Siliziumdioxid sein. Der pH-Wert des dotierten pyrogenen Oxids, gemessen in einer 4-prozentigen wäßrigen Dispersion kann mehr als 5, bevorzugt von 7 bis 8 betragen. Die BET-Oberfläche des dotierten Oxids liegt zwischen 1 und 1000 $m^2$/g, bevorzugt zwischen 60 und 300 $m^2$/g.

Die (DBP-Zahl) Dibutylphtalatabsorption kann keinen meßbaren Endpunkt erkennen lassen, und die BET-Oberfläche des dotierten Oxids liegt zwischen 1 und 1000 $m^2$/g.

Ein weiterer Gegenstand der Erfindung ist ein Verfahren zur Herstellung der mittels Aerosol mit Kalium dotierten pyrogenen Oxide von Metallen und/oder Metalloiden, welches dadurch gekennzeichnet ist, daß man in eine Flamme, wie sie zur Herstellung von pyrogenen Oxiden, bevorzugt von Siliziumdioxid nach der Art der Flammenoxidation oder bevorzugt der der Flammenhydrolyse benutzt wird, ein Aerosol, hergestellt aus einer Kaliumsalzlösung mit einem Gehalt an Kaliumchlorid von größer 0,5 Gew.-% KCl einspeist, dieses Aerosol vor der Reaktion mit dem Gasgemisch der Flammenoxidation beziehungsweise Flammenhydrolyse homogen mischt, dann das Aerosol-Gasgemisch in einer Flamme abreagieren läßt und die entstandenen pyrogenen mit Kalium dotierten Oxide in bekannter Weise vom Gasstrom abtrennt, wobei als Ausgangsprodukt des Aerosols eine Kaliumsalzlösung dient, die das Kaliumsalz enthält, wobei man das Aerosol durch Vernebelung durch einen Aerosolgenerator vorzugsweise nach der Zweistoffdüsenmethode herstellt.

Das Verfahren zur Herstellung von pyrogenen Oxiden wie zum Beispiel Siliziumdioxid ist bekannt aus Ullmann's Encyclopädie der technischen Chemie 4. Auflage, Band 21, Seite 464 (1982). Als Ausgangsstoff kann neben Siliziumtetrachlorid jede verflüchtigbare Verbindung des Siliziums wie zum Beispiel Methylmonochlorsilan eingesetzt werden.

Ein Verfahren zur Herstellung von mittels Aerosol dotiertem Siliziumdioxid ist bekannt aus DE 196 50 500.

Bei dem erfindungsgemäßen Verfahren kann zusätzlich Sauerstoff hinzugegeben werden.

Das erfindungsgemäße mittels Aerosol mit Kalium dotierte Siliziumdioxid weist eine deutlich schmalere Teilchengrößenverteilungskurve als das bekannte Siliziumdioxid auf. Es eignet sich auf Grund dessen insbesondere zur Verwendung als Abrasionsmittel bei dem CMP (Chemical Mechanical Polishing). Das Kalium ist bei dem erfindungsgemäßen Siliziumdioxid gleichmäßig verteilt. Es ist auf dem EM-Aufnahmen nicht zu lokalisieren.

Die so mit Kalium dotierten pyrogenen Oxide weisen überraschenderweise im elektronenmikroskopischen Bild sphärische, runde Primärpartikel auf, die nur sehr wenig miteinander verwachsen sind, was sich darin äußert, daß bei einer "Strukturbestimmung" nach der DBP-Methode kein Endpunkt erkennbar ist. Weiterhin können aus diesen mit Kalium dotierten pyrogenen Pulvern hochgefüllte Dispersionen niedriger Viskosität hergestellt werden.

Ein weiterer Gegenstand der Erfindung ist die Verwendung mittels Aerosol mit Kalium dotierten pyrogenen Oxide als Füllstoff, als Trägermaterial, als katalytisch aktive Substanz, als Ausgangsmaterial zur Herstellung von Dispersionen, als Poliermaterial (CMP-Anwendungen), als keramischen Grundstoff, in der Elektronikindustrie, in der Kosmetikindustrie, als Additiv in der Silikon- und Kautschukindustrie, zur Einstellung der Rheologie von flüssigen Systemen, zur Hitzeschutzstabilisierung, in der Lackindustrie.

Der erfindungsgemäße Gegenstand wird anhand der folgenden Beispiele näher erläutert und beschrieben:

Es wird eine Brenneranordnung benutzt, wie sie in der DE OS 196 50 500 beschrieben ist.

Beispiel 1: Vergleichsbeispiel ohne Dotierung mit Kaliumsalzen jedoch mit Wasserdampf

4,44 kg/h $SiCl_4$ werden bei ca. 130 °C verdampft und in das Zentralrohr des Brenners bekannter Bauart gemäß DE 196 50 500 A1 überführt. In dieses Rohr werden zusätzlich 2,9 $Nm^3$/h Wasserstoff sowie 3,8 $Nm^3$/h Luft und 0,25 $Nm^3$/h Sauerstoff eingespeist. Dieses Gasgemisch strömt aus der inneren Brennerdüse und brennt in den Brennerraum des wassergekühlten Flammrohres.

In die Manteldüse, die die Zentraldüse umgibt, werden zur Vermeidung von Anbackungen zusätzlich 0,3 $Nm^3$/h (Sekundär-)Wasserstoff und 0,3 $Nm^3$/h Stickstoff eingespeist.

Aus der Umgebung werden noch ca. 10 $Nm^3$/h Luft in das unter leichtem Unterdruck stehende Flammrohr eingesaugt. (Offene Brennerfahrweise).

Die zweite Gaskomponente, die in das Axialrohr eingegeben wird, besteht in diesem Vergleichsbeispiel aus Wasserdampf, der durch Überhitzen bei ca. 180 °C von destilliertem Wasser erzeugt wird. Als Aerosolgenerator dienen dabei 2 Zweistoffdüsen, die eine Vernebelungsleistung von 250 g/h Wasser erbringen.

Der vernebelte Wasserdampf wird unter Zuhilfenahme eines Traggasstromes von ca. 2 $Nm^3$/h Luft durch beheizte Leitungen geführt, wobei der Wasserdampfnebel bei Temperaturen um ca. 180 °C in Gas übergeht.

Nach der Flammenhydrolyse werden die Reaktionsgase und die entstandene pyrogene Kieselsäure durch Anlegen eines Unterdruckes durch ein Kühlsystem gesaugt und dabei der Partikel-Gasstrom auf ca. 100 bis 160 °C abgekühlt. In einem Filter oder Zyklon wird der Feststoff von dem Abgasstrom abgetrennt.

Die entstandene pyrogene Kieselsäure fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt.

Die BET-Oberfläche der pyrogenen Kieselsäure beträgt 124 $m^2$/g.

Die Breite der Teilchengrößenverteilung wird wie folgt ermittelt:

$$d_n = 16,67 \text{ nm}$$
$$d_a = 31,82 \text{ nm}$$

Der Quotient $q_1 = \dfrac{dn}{da} = 0,52$.

Die Herstellbedingungen sind in Tabelle 1 zusammengefaßt. Die analytischen Daten der erhaltenen Kieselsäure sind in Tabelle 2 angegeben.

Beispiel 2: Dotierung von Aerosil mit Kalium gemäß Erfindung

4,44 kg/h $SiCl_4$ werden bei ca. 130 °C verdampft und in das Zentralrohr des Brenners bekannter Bauart gemäß DE 196 50 500 A1 überführt. In dieses Rohr werden zusätzlich 4,7 $Nm^3$/h Wasserstoff sowie 3,7 $Nm^3$/h Luft und 1,15 $Nm^3$/h Sauerstoff eingespeist. Dieses Gasgemisch strömt aus der inneren Brennerdüse und brennt in den Brennerraum des wassergekühlten Flammrohres.

In die Manteldüse, die die Zentraldüse umgibt, werden zur Vermeidung von Anbackungen zusätzlich 0,5 $Nm^3$/h (Sekundär-)Wasserstoff und 0,3 $Nm^3$/h Stickstoff eingespeist.

Aus der Umgebung werden noch ca. 10 $Nm^3$/h Luft in das unter leichtem Unterdruck stehende Flammrohr eingesaugt. (Offene Brennerfahrweise).

Die zweite Gaskomponente, die in das Axialrohr eingegeben wird, besteht aus einem Aerosol, das aus einer 12,55 prozentigen wäßrigen Kaliumchloridlösung erzeugt wird. Als Aerosolgenerator dienen dabei 2 Zweistoffdüsen, die eine Vernebelungsleistung von 255 g/h Aerosol erbringen. Dieses wäßrige Salz-Aerosol mittels 2 $Nm^3$/h Tragluft durch von außen geheizte Leitungen geführt und verläßt die innere Düse mit einer Austrittstemperatur von ca. 180 °C. Das kaliumsalzhaltige Aerosol wird in die Flamme eingebracht.

Nach der Flammenhydrolyse werden in bekannter Art die Reaktionsgase und die entstandene pyrogene Kieselsäure durch Anlegen eines Unterdruckes durch ein Kühlsystem gesaugt und dabei der Partikel-Gasstrom auf ca. 100 bis 160 °C abgekühlt. In einem Filter oder Zyklon wird der Feststoff von dem Abgasstrom abgetrennt.

Die entstandene mit Kalium dotierte pyrogene Kieselsäure fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt.

Die BET-Oberfläche der pyrogenen Kieselsäure beträgt 131 $m^2$/g.

Die Herstellbedingungen sind in Tabelle 1 zusammengefaßt. Die analytischen Daten der erhaltenen Kieselsäure sind in Tabelle 2 angegeben.

Beispiel 3: Dotierung von Aerosil mit Kalium gemäß Erfindung

4,44 kg/h $SiCl_4$ werden bei ca. 130 °C verdampft und in das Zentralrohr des Brenners bekannter Bauart gemäß DE 196 50 500 A1 überführt. In dieses Rohr werden zusätzlich 4,7 $Nm^3$/h Wasserstoff sowie 3,7 $Nm^3$/h Luft und 1,15 $Nm^3$/h Sauerstoff eingespeist. Dieses Gasgemisch strömt aus der inneren Brennerdüse und brennt in den Brennerraum des wassergekühlten Flammrohres.

In die Manteldüse, die die Zentraldüse umgibt, werden zur Vermeidung von Anbackungen zusätzlich 0,5 $Nm^3$/h (Sekundär-)Wasserstoff und 0,3 $Nm^3$/h Stickstoff eingespeist.

Aus der Umgebung werden noch ca. 10 $Nm^3$/h Luft in das unter leichtem Unterdruck stehende Flammrohr eingesaugt. (Offene Brennerfahrweise).

Die zweite Gaskomponente, die in das Axialrohr eingegeben wird, besteht aus einem Aerosol, das aus einer 2,22 prozentigen wäßrigen Kaliumchloridlösung erzeugt wird. Als Aerosolgenerator dienen dabei 2 Zweistoffdüsen, die eine Vernebelungsleistung von 210 g/h Aerosol erbringen. Dieses wäßrige Salz-Aerosol wird mittels 2 $Nm^3$/h Tragluft durch von außen geheizte Leitungen geführt und verläßt die innere Düse mit einer Austrittstemperatur von ca. 180 °C. Das Aerosol wird in die Flamme eingebracht und verändert entsprechend die Eigenschaften der erzeugten pyrogenen Kieselsäure.

Nach der Flammenhydrolyse werden in bekannter Art die Reaktionsgase und die entstandene pyrogene Kieselsäure durch Anlegen eines Unterdruckes durch ein Kühlsystem gesaugt und dabei der Partikel-Gasstrom auf ca. 100 bis 160 °C abgekühlt. In einem Filter oder Zyklon wird der Feststoff von dem Abgasstrom abgetrennt.

Die entstandene mit Kalium dotierte pyrogene Kieselsäure fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt.

Die BET-Oberfläche der pyrogenen Kieselsäure beträgt 104 $m^2$/g.

Die Herstellbedingungen sind in Tabelle 1 zusammengefaßt. Die analytischen Daten der erhaltenen Kieselsäure sind in Tabelle 2 angegeben.

Beispiel 4: Dotierung von Aerosil mit Kalium gemäß Erfindung

4,44 kg/h $SiCl_4$ werden bei ca. 130 °C verdampft und in das Zentralrohr des Brenners bekannter Bauart gemäß DE 196 50 500 A1 überführt. In dieses Rohr werden zusätzlich 4,7 $Nm^3$/h Wasserstoff sowie 3,7 $Nm^3$/h Luft und 1,15 $Nm^3$/h Sauerstoff eingespeist. Dieses Gasgemisch strömt aus der inneren Brennerdüse und brennt in den Brennerraum eines wassergekühlten Flammrohres.

In die Manteldüse, die die Zentraldüse umgibt, werden zur Vermeidung von Anbackungen zusätzlich 0,5 $Nm^3$/h (Sekundär-) Wasserstoff und 0,3 $Nm^3$/h Stickstoff eingespeist.

Aus der Umgebung werden noch ca. 10 $Nm^3$/h Luft in das unter leichtem Unterdruck stehende Flammrohr eingesaugt. (Offene Brennerfahrweise).

Die zweite Gaskomponente, die in das Axialrohr eingegeben wird, besteht aus einem Aerosol, das aus einer 4,7 prozentigen wäßrigen Kaliumchloridlösung erzeugt wird. Als Aerosolgenerator dienen dabei 2 Zweistoffdüsen, die eine Vernebelungsleistung von 225 g/h Aerosol erbringen. Dieses wäßrige Salz-Aerosol wird mittels 2 $Nm^3$/h Tragluft durch von außen geheizte Leitungen geführt und verläßt die innere Düse mit einer Austrittstemperatur von ca. 180 °C. Das Aerosol wird in die Flamme eingebracht.

Nach der Flammenhydrolyse werden in bekannter Art die Reaktionsgase und die entstandene pyrogene Kieselsäure durch Anlegen eines Unterdruckes durch ein Kühlsystem gesaugt und dabei der Partikel-Gasstrom auf ca. 100 bis 160 °C abgekühlt. In einem Filter oder Zyklon wird der Feststoff von dem Abgasstrom abgetrennt.

Die entstandene mit Kalium dotierte pyrogene Kieselsäure fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt.

Die BET-Oberfläche der pyrogenen Kieselsäure beträgt 113 $m^2$/g.

Die Herstellbedingungen sind in Tabelle 1 zusammengefaßt. Die analytischen Daten der erhaltenen Kieselsäure sind in Tabelle 2 angegeben.

Beispiel 5: Dotierung von Aerosil mit Kalium gemäß Erfindung

4,44 kg/h $SiCl_4$ werden bei ca. 130 °C verdampft und in das Zentralrohr des Brenners bekannter Bauart gemäß DE 196 50 500 A1 überführt. In dieses Rohr werden zusätzlich 4,7 $Nm^3$ /h Wasserstoff sowie 3,7 $Nm^3$/h Primärluft und 1,15 $Nm^3$/h Sauerstoff eingespeist. Dieses Gasgemisch strömt aus der inneren Brennerdüse und brennt in den Brennerraum des wassergekühlten Flammrohres.

In die Manteldüse, die die Zentraldüse umgibt, werden zur Vermeidung von Anbackungen zusätzlich 0,5 $Nm^3$/h (Sekundär-) Wasserstoff und 0,3 $Nm^3$/h Stickstoff eingespeist.

Aus der Umgebung werden noch ca. 10 $Nm^3$/h Luft in das unter leichtem Unterdruck stehende Flammrohr eingesaugt. (Offene Brennerfahrweise).

Die zweite Gaskomponente, die in das Axialrohr eingegeben wird, besteht aus einem Aerosol, das aus einer 9,0 prozentigen wäßrigen Kaliumchloridlösung erzeugt wird. Als Aerosolgenerator dienen dabei 2 Zweistoffdüsen, die eine Vernebelungsleistung von 210 g/h Aerosol erbringen. Dieses wäßrige Salz-Aerosol wird mittels 2 $Nm^3$/h Tragluft durch von außen geheizte Leitungen geführt und verläßt die innere Düse mit einer Austrittstemperatur von ca. 180 °C. Das Aerosol wird in die Flamme eingebracht.

Nach der Flammenhydrolyse werden in bekannter Art die Reaktionsgase und die entstandene pyrogene Kieselsäure durch Anlegen eines Unterdruckes durch ein Kühlsystem gesaugt und dabei der Partikel-Gasstrom auf ca. 100 bis 160 °C abgekühlt. In einem Filter oder Zyklon wird der Feststoff von dem Abgasstrom abgetrennt.

Die entstandene mit Kalium dotierte pyrogene Kieselsäure fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt

Die BET-Oberfläche der pyrogenen Kieselsäure beträgt 121 $m^2$/g.

Die Herstellbedingungen sind in Tabelle 1 zusammengefaßt. Die analytischen Daten der erhaltenen Kieselsäure sind in Tabelle 2 angegeben.

Beispiel 6: Dotierung von Aerosil mit Kalium gemäß Erfindung

4,44 kg/h $SiCl_4$ werden bei ca. 130 °C verdampft und in das Zentralrohr des Brenners bekannter Bauart gemäß DE 196 50 500 A1 überführt. In dieses Rohr werden zusätzlich 4,7 $Nm^3$/h Wasserstoff sowie 3,7 $Nm^3$/h Luft und 1,15 $Nm^3$/h Sauerstoff eingespeist. Dieses Gasgemisch strömt aus der inneren Brennerdüse und brennt in den Brennerraum des wassergekühlten Flammrohres.

In die Manteldüse, die die Zentraldüse umgibt, werden zur Vermeidung von Anbackungen zusätzlich 0,5 $Nm^3$/h (Sekundär-)Wasserstoff und 0,3 $Nm^3$/h Stickstoff eingespeist.

Aus der Umgebung werden noch ca. 10 $Nm^3$/h Luft in das unter leichtem Unterdruck stehende Flammrohr eingesaugt. (Offene Brennerfahrweise).

Die zweite Gaskomponente, die in das Axialrohr eingegeben wird, besteht aus einem Aerosol, das aus einer 12,0 prozentigen wäßrigen Kaliumchloridlösung erzeugt wird. Als Aerosolgenerator dienen dabei 2 Zweistoffdüsen, die eine Vernebelungsleistung von 225 g/h Aerosol erbringen. Dieses wäßrige Salz-Aerosol wird mittels 2 $Nm^3$/h Tragluft durch von außen geheizte Leitungen geführt und verläßt die innere Düse mit einer Austrittstemperatur von ca. 180 °C. Das Aerosol wird in die Flamme eingebracht.

Nach der Flammenhydrolyse werden in bekannter Art die Reaktionsgase und die entstandene pyrogene Kieselsäure durch Anlegen eines Unterdruckes durch ein Kühlsystem gesaugt und dabei der Partikel-Gasstrom auf ca. 100 bis 160 °C abgekühlt. In einem Filter oder Zyklon wird der Feststoff von dem Abgasstrom abgetrennt.

Die entstandene mit Kalium dotierte pyrogene Kieselsäure fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt

Die BET-Oberfläche der pyrogenen Kieselsäure beträgt 120 $m^2$/g.

Die Herstellbedingungen sind in Tabelle 1 zusammengefaßt. Die analytischen Daten der erhaltenen Kieselsäure sind in Tabelle 2 angegeben.

Beispiel 7: Dotierung mit Kalium gemäß Erfindung

4,44 kg/h $SiCl_4$ werden bei ca. 130 °C verdampft und in das Zentralrohr des Brenners bekannter Bauart gemäß DE 196 50 500 A1 überführt. In dieses Rohr werden zusätzlich 4,7 $Nm^3$/h Wasserstoff sowie 3,7 $Nm^3$/h Luft und 1,15 $Nm^3$/h Sauerstoff eingespeist. Dieses Gasgemisch strömt aus der inneren Brennerdüse und brennt in den Brennerraum des wassergekühlten Flammrohres.

In die Manteldüse, die die Zentraldüse umgibt, werden zur Vermeidung von Anbackungen zusätzlich 0,5 $Nm^3$/h (Sekundär-) Wasserstoff und 0,3 $Nm^3$/h Stickstoff eingespeist.

Aus der Umgebung werden noch ca. 10 $Nm^3$/h Luft in das unter leichtem Unterdruck stehende Flammrohr eingesaugt. (Offene Brennerfahrweise).

Die zweite Gaskomponente, die in das Axialrohr eingegeben wird, besteht aus einem Aerosol, das aus einer 20 prozentigen wäßrigen Kaliumchloridlösung erzeugt wird. Als Aerosolgenerator dienen dabei 2 Zweistoffdüsen, die eine Vernebelungsleistung von 210 g/h Aerosol erbringen. Dieses wäßrige Salz-Aerosol wird mittels von 2 $Nm^3$/h Tragluft

durch von außen geheizte Leitungen geführt und verläßt die innere Düse mit einer Austrittstemperatur von ca. 180 °C. Das Aerosol wird in die Flamme eingebracht.

Nach der Flammenhydrolyse werden in bekannter Art die Reaktionsgase und die entstandene pyrogene Kieselsäure durch Anlegen eines Unterdruckes durch ein Kühlsystem gesaugt und dabei der Partikel-Gasstrom auf ca. 100 bis 160 °C abgekühlt. In einem Filter oder Zyklon wird der Feststoff von dem Abgasstrom abgetrennt.

Die entstandene mit Kaliumoxid dotierte pyrogene Kieselsäure fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt.

Die BET-Oberfläche der pyrogenen Kieselsäure beträgt 117 $m^2$/g.

Die Breite der Teilchengrößenverteilung wird wie folgt ermittelt:

$$d_n = 20,99 \text{ nm}$$
$$d_a = 24,27 \text{ nm}$$

Der Quotient $q_1 = \dfrac{dn}{da} = 0{,}86.$

Die Herstellbedingungen sind in Tabelle 1 zusammengefaßt Die analytischen Daten der so erhaltenen Kieselsäure sind in Tabelle 2 angegeben.

Tabelle 1

| Nr. | SiCl$_4$ kg/h | Primärluft Nm$^3$/h | O$_2$ zus. Nm$^3$/h | H$_2$ Kern Nm$^3$/h | H$_2$ Mantel Nm$^3$/h | N$_2$ Mantel Nm$^3$/h | Gas-Temp. C | KCl-Salz-Lösung Gew.-% | Aerosol menge g/h | Luft Aeros. Nm3/h | BET m$^2$/g |
|---|---|---|---|---|---|---|---|---|---|---|---|
| Experimentelle Bedingungen bei der Herstellung dotierter pyrogener Kieselsäure | | | | | | | | | | | |
| Beispiel 1 ohne Salzzugabe | | | | | | | | | | | |
| 1 | 4,44 | 3,8 | 0,25 | 2,9 | 0,3 | 0,3 | 130 | Nur H$_2$O | 250 | 2 | 124 |
| Beispiele 2 bis 7 mit Salzzugabe | | | | | | | | | | | |
| 2 | 4,44 | 3,7 | 1,15 | 4,7 | 0,5 | 0,3 | 130 | 12,55 | 255 | 2 | 131 |
| 3 | 4,44 | 3,7 | 1,15 | 4,7 | 0,5 | 0,3 | 130 | 2,22 | 210 | 2 | 104 |
| 4 | 4,44 | 3,7 | 1,15 | 4,7 | 0,5 | 0,3 | 130 | 4,7 | 225 | 2 | 113 |
| 5 | 4,44 | 3,7 | 1,15 | 4,7 | 0,5 | 0,3 | 130 | 9,0 | 210 | 2 | 121 |
| 6 | 4,44 | 3,7 | 1,15 | 4,7 | 0,5 | 0,3 | 130 | 12,0 | 225 | 2 | 120 |
| 7 | 4,44 | 3,7 | 1,15 | 4,7 | 0,5 | 0,3 | 130 | 20,0 | 210 | 2 | 117 |
| Erläuterung: Primärluft = Luftmenge im Zentralrohr; H$_2$-Kern = Wasserstoff im Zentralrohr; Gas-Temp. = Gastemperatur an der Düse des Zentralrohres; Aerosolmenge = Massenstrom der in Aerosolform überführten Salzlösung; Luft-Aerosol = Traggasmenge (Luft) des Aerosols; | | | | | | | | | | | |

Tabelle 2

| Nr. | BET m$^2$/g | pH 4% wäßrige Dispersion | Kaliumgehalt in Gew.-% als K$_2$O | DBP in g/100g bei 16 g Einwaage | Schüttdichte G/l | Stampfdichte g/l |
|---|---|---|---|---|---|---|
| Analytische Daten der nach Beispiel 1 bis 7 erhaltenen dotierten Kieselsäuren | | | | | | |
| Vergleichsbeispiel ohne Salz | | | | | | |
| 1 | 124 | 4,68 | 0 | 185 | 28 | 39 |
| Beispiele mit Kaliumsalzzugabe | | | | | | |
| 2 | 131 | 7,64 | 0,44 | kein Endpunkt | 28 | 36 |
| 3 | 104 | 7,22 | 0,12 | kein Endpunkt | 31 | 43 |
| 4 | 113 | 7,67 | 0,24 | kein Endpunkt | 32 | 45 |
| 5 | 121 | 7,7 | 0,49 | kein Endpunkt | 32 | 43 |
| 6 | 120 | 7,96 | 0,69 | kein Endpunkt | 30 | 44 |
| 7 | 117 | 7,86 | 1,18 | kein Endpunkt | 28 | 38 |
| Erläuterung: pH 4% Sus. = pH-Wert der vierprozentigen wäßrigen Suspension; DBP = Dibutylphtalatabsorption | | | | | | |

Der Gegenstand der Erfindung wird an Hand der Zeichnungen und Abbildungen näher erläutert:

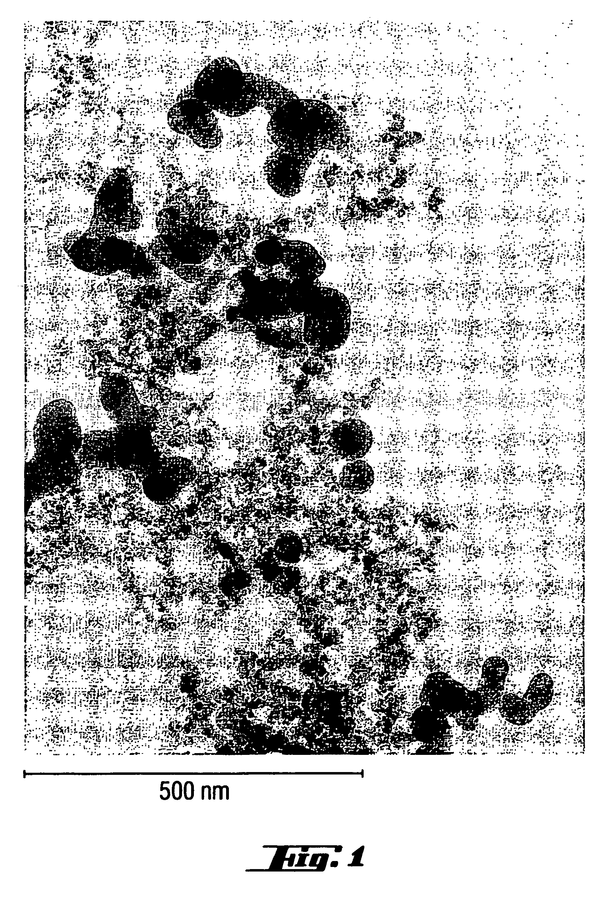

Figur 1 zeigt eine EM-Aufnahme der pyrogenen Kieselsäure des Vergleichsbeispiels 1 (ohne Dotierung).

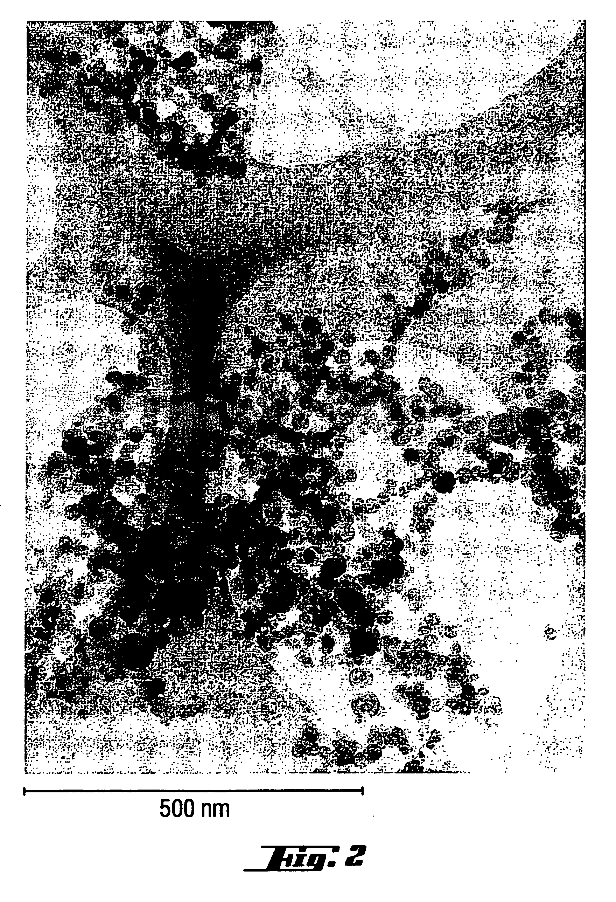

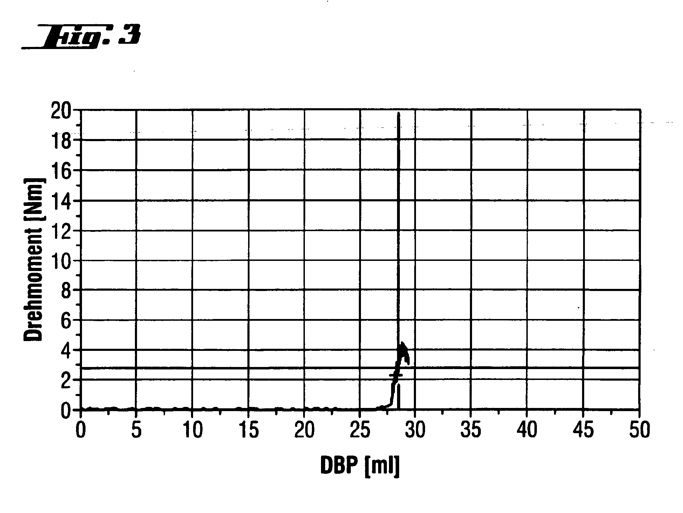

Figur 2 zeigt eine EM-Aufnahme der mit Kalium dotierten pyrogenen Kieselsäure gemäß Beispiel 2. Erkennbar ist, daß bei der Dotierung mit Kaliumsalzen die Aggregat- beziehungsweise Agglomeratstruktur verändert wird, wobei bei der Dotierung sphärische Primärpartikel entstehen, die wenig miteinander verwachsen sind. Die Unterschiede in der "Struktur", das heißt dem Verwachsungsgrad der Teilchen, äußern sich in deutlich unterschiedlichen DBP-Absorptionen (Dibutylphtalatabsorption), beziehungsweise dem unterschiedlichen Verlauf der DBP-Absorptionskurven. Figur 3 zeigt die DBP-Kurve der Pulver des Vergleichsbeispieles 1 (Einwaage 16 g): Die Kraftaufnahme beziehungsweise das gemessene Drehmoment (in Nm) der rotierenden Schaufeln des DBP-Meßgerätes (Rheocord 90 der Fa. Haake/Karlsruhe) zeigt ein scharf ausgeprägtes Maximum mit einem anschließenden Abfall bei einer bestimmten Zugabe von DBP. Diese Kurvenform ist charakteristisch für bekannte pyrogene Oxide, die nicht dotiert sind.

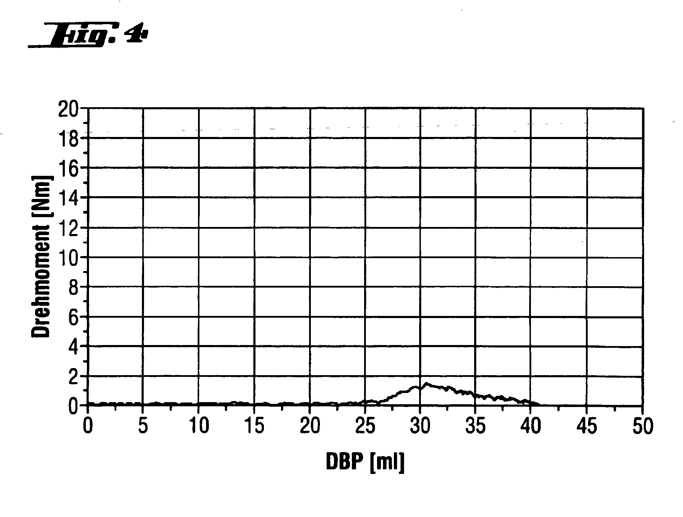

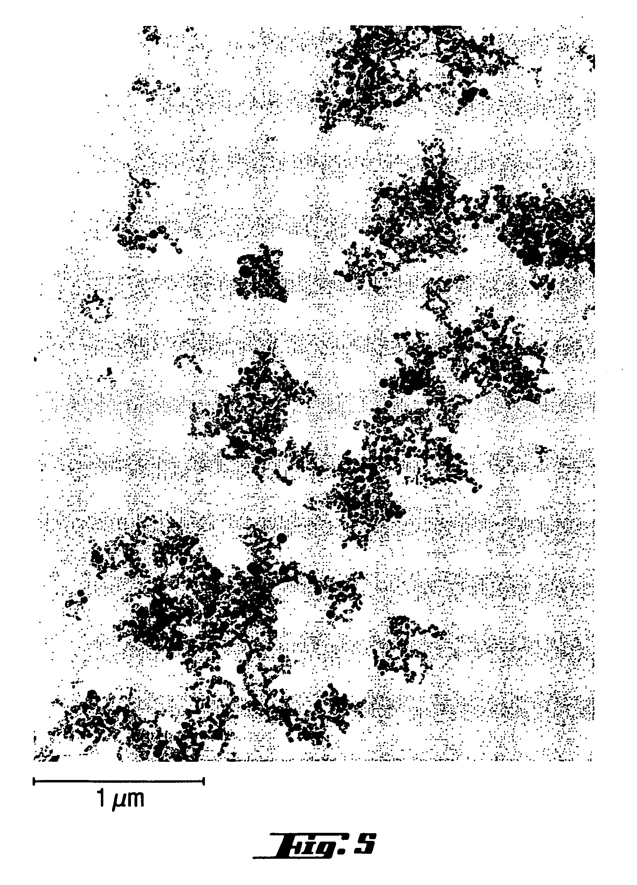

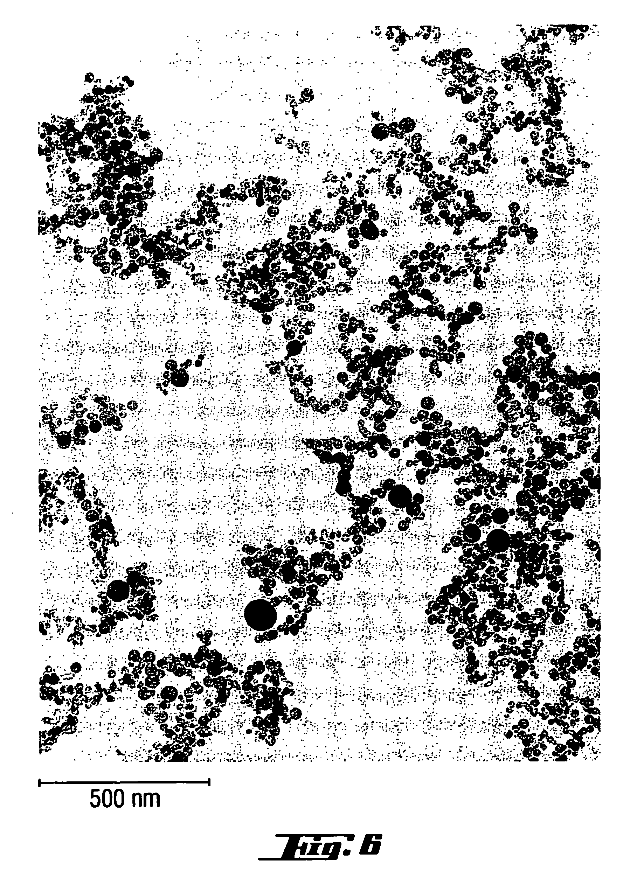

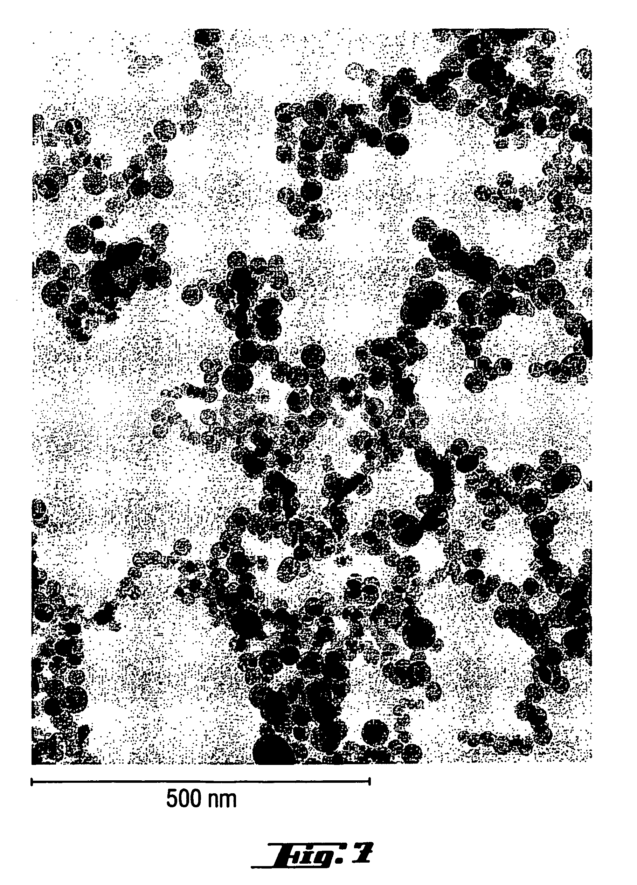

Figur 4 zeigt die DBP-Kurve des Pulvers des erfindungsgemäßen mit Kalium dotierten pyrogenen Oxids(16 g Einwaage) gemäß Beispiel 2. Ein scharfer Anstieg des Drehmoments mit anschließendem starken Abfall ist nicht zu erkennen. Aus diesem Grunde kann das DBP-Meßgerät auch keinen Endpunkt detektieren. Figur 5 zeigt die elektronenmikroskopische Aufnahme des Pulvers gemäß Beispiel 3 mit der Vergrößerung 1:50000. Figur 6 zeigt die elektronenmikroskopische Aufnahme des Pulvers gemäß Beispiel 3 mit der Vergrößerung 1:100000. Figur 7 zeigt die elektronenmikroskopische Aufnahme des Pulvers gemäß Beispiel 3 mit der Vergrößerung 1:200000.

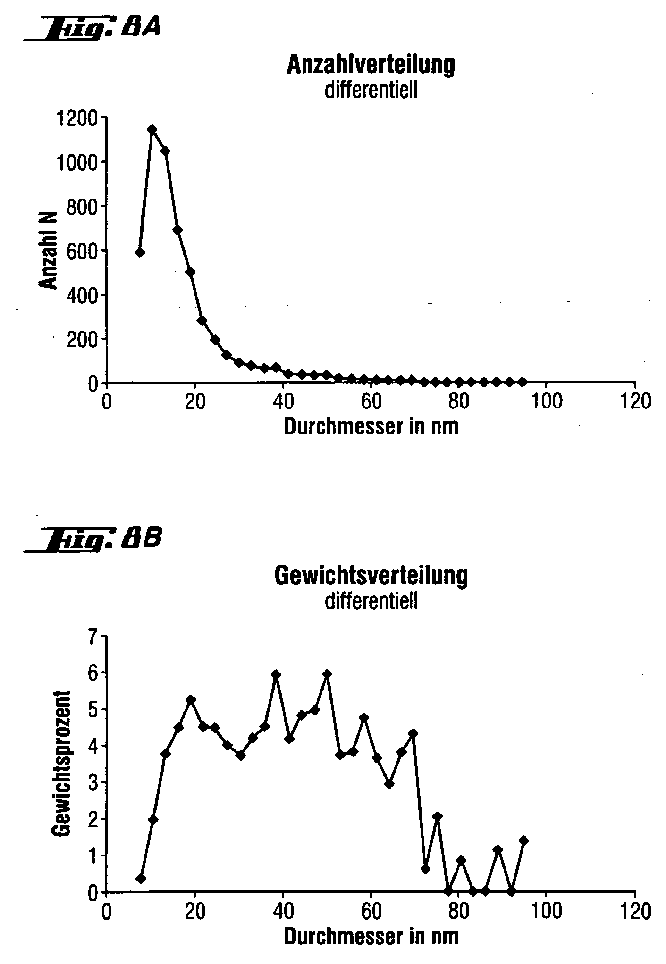

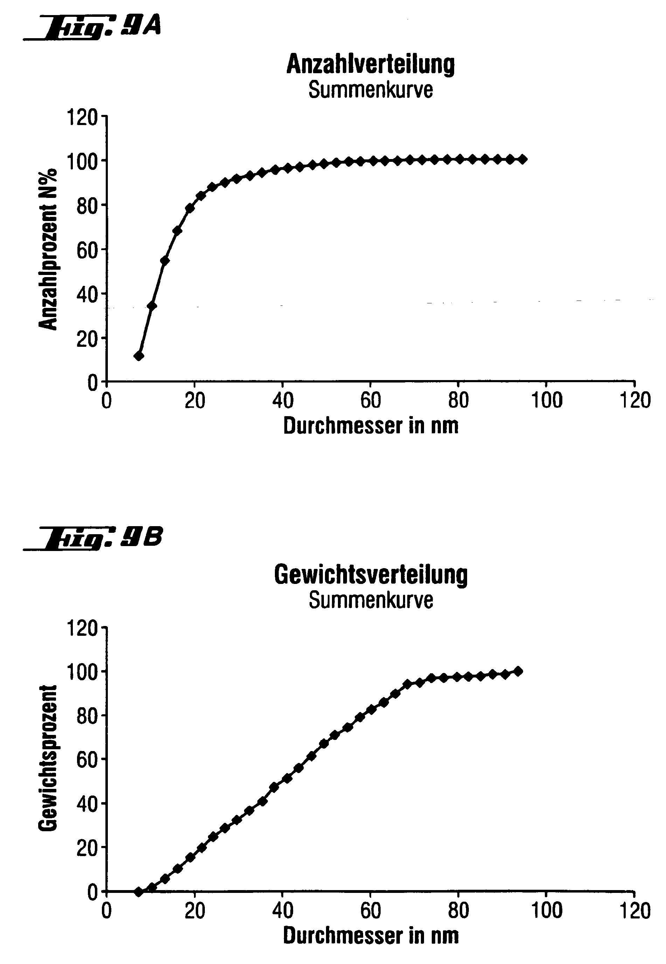

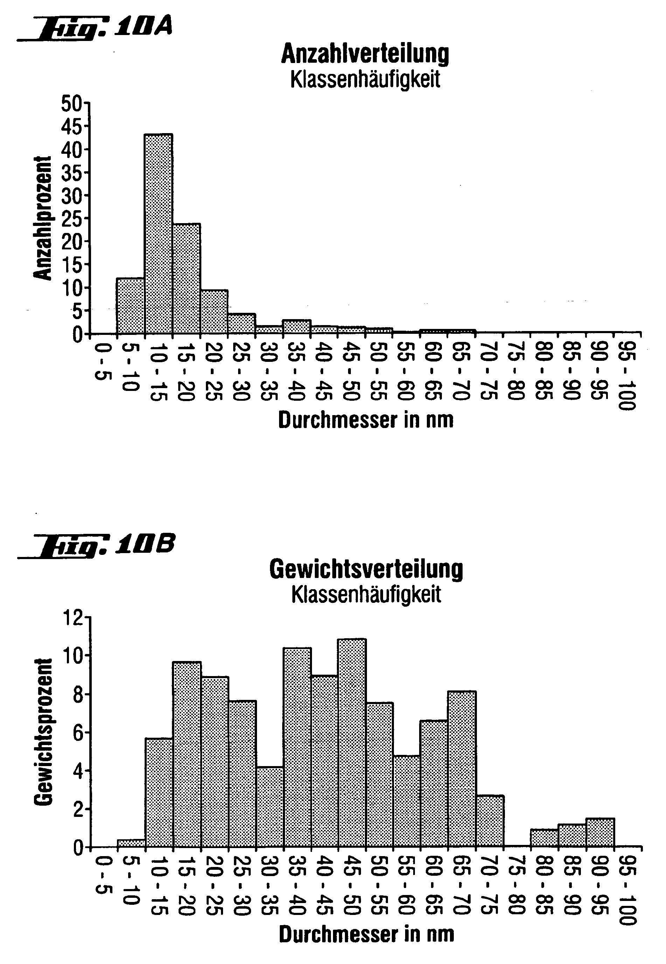

Die Teilchenauszählung mittels EM-Aufnahme zeigt deutlich die schmalere Teilchenverteilungskurve des erfindungsgemäßen mittels Aerosol mit Kalium dotierten Siliziumdioxides.
Die Tabelle 3 zeigt die Ergebnisse der Teilchenauszählung der Pulver des Beispiels 1 (Vergleichsbeispiel), mittels der EM-Aufnahme. Diese Werte sind in den Figuren 8, 9 und 10 graphisch dargestellt.

Tabelle 3

| | |
|---|---|
| Gesamtzahl der gemessenenen Teilchen N: | 5074 |
| Teilchendurchmesser, arithmetisches Mittel DN: | 16,678 nm |
| Teilchendurchmesser, über die Oberfläche gemittelt DA: | 31,825 nm |
| Teilchendurchmesser, über das Volumen gemittelt DV: | 42,178 nm |
| Teilchendurchmesser, Standardabweichung S: | 10,011 nm |

(fortgesetzt)

| | | |
|---|---|---|
| Teilchendurchmesser, Variationskoeffizient V: | | 60,027 |
| spezifische Oberfläche OEM: | | 85,696 qm/g |
| Medianwert Anzahlverteilung D50(A): | | 12,347 nm |
| Medianwert Gewichtsverteilung D50(g): | | 40,086 nm |
| 90 %-Spanne Anzahlverteilung: | 3,166 nm - | 36,619 nm |
| 90 %-Spanne Gewichtsverteilung: | 12,153 nm - | 72,335 nm |
| Gesamtspanne: | 7,400 nm - | 94,200 nm |

| Durchmesser D | Anzahl N | Anzahl % N % | Summe Anzahl % | Gewichts % ND3 % | Summe Gewichts % |
|---|---|---|---|---|---|
| 7,400 | 593 | 11,687 | 11,687 | 0,393 | 0,393 |
| 10,200 | 1142 | 22,507 | 34,194 | 1,984 | 2,377 |
| 13,000 | 1046 | 20,615 | 54,809 | 3,761 | 6,138 |
| 15,800 | 693 | 13,658 | 68,467 | 4,474 | 10,612 |
| 18,600 | 498 | 9,815 | 78,281 | 5,245 | 15,857 |
| 21,400 | 281 | 5,538 | 83,819 | 4,507 | 20,364 |
| 24,200 | 193 | 3,804 | 87,623 | 4,477 | 24,841 |
| 27,000 | 124 | 2,444 | 90,067 | 3,995 | 28,836 |
| 29,800 | 86 | 1,695 | 91,762 | 3,725 | 32,561 |
| 32,600 | 74 | 1,458 | 93,220 | 4,196 | 36,757 |
| 35,400 | 62 | 1,222 | 94,442 | 4,502 | 41,259 |
| 38,200 | 65 | 1,281 | 95,723 | 5,930 | 47,189 |
| 41,000 | 37 | 0,729 | 96,453 | 4,174 | 51,363 |
| 43,800 | 35 | 0,690 | 97,142 | 4,814 | 56,176 |
| 46,600 | 30 | 0,591 | 97,734 | 4,969 | 61,145 |
| 49,400 | 30 | 0,591 | 98,325 | 5,919 | 67,065 |
| 52,200 | 16 | 0,315 | 98,640 | 3,725 | 70,789 |
| 55,000 | 14 | 0,276 | 98,916 | 3,812 | 74,602 |
| 57,800 | 15 | 0,296 | 99,212 | 4,741 | 79,343 |
| 60,600 | 10 | 0,197 | 99,409 | 3,642 | 82,985 |
| 63,400 | 7 | 0,138 | 99,547 | 2,920 | 85,905 |
| 66,200 | 8 | 0,158 | 99,704 | 3,799 | 89,703 |
| 69,000 | 8 | 0,158 | 99,862 | 4,301 | 94,005 |
| 71,800 | 1 | 0,020 | 99,882 | 0,606 | 94,611 |
| 74,600 | 3 | 0,059 | 99,941 | 2,039 | 96,649 |
| 80,200 | 1 | 0,020 | 99,961 | 0,844 | 97,494 |
| 88,600 | 1 | 0,020 | 99,980 | 1,138 | 98,632 |
| 94,200 | 1 | 0,020 | 100,000 | 1,368 | 100,000 |

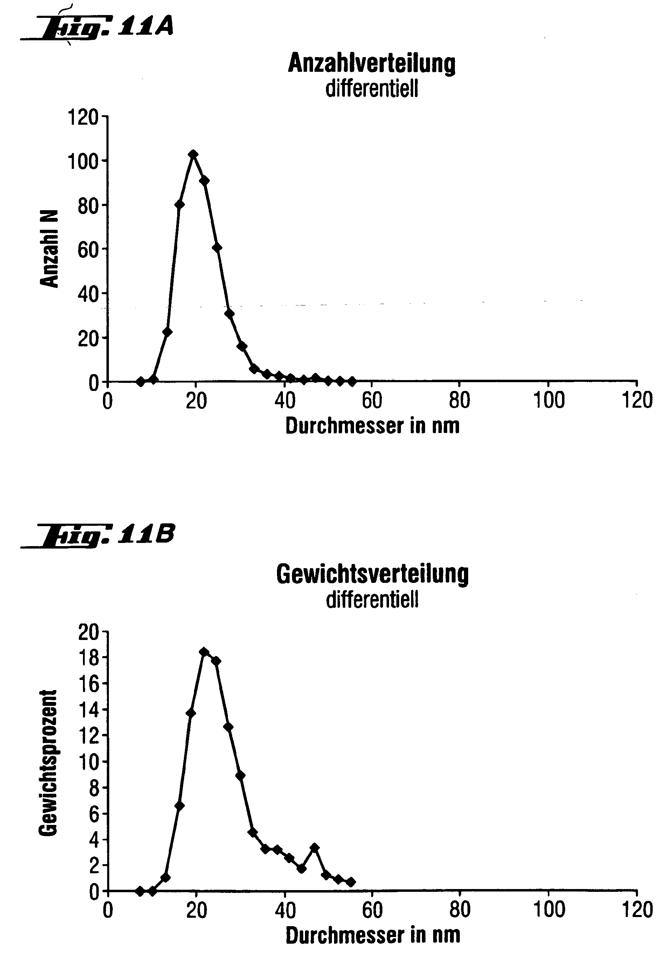

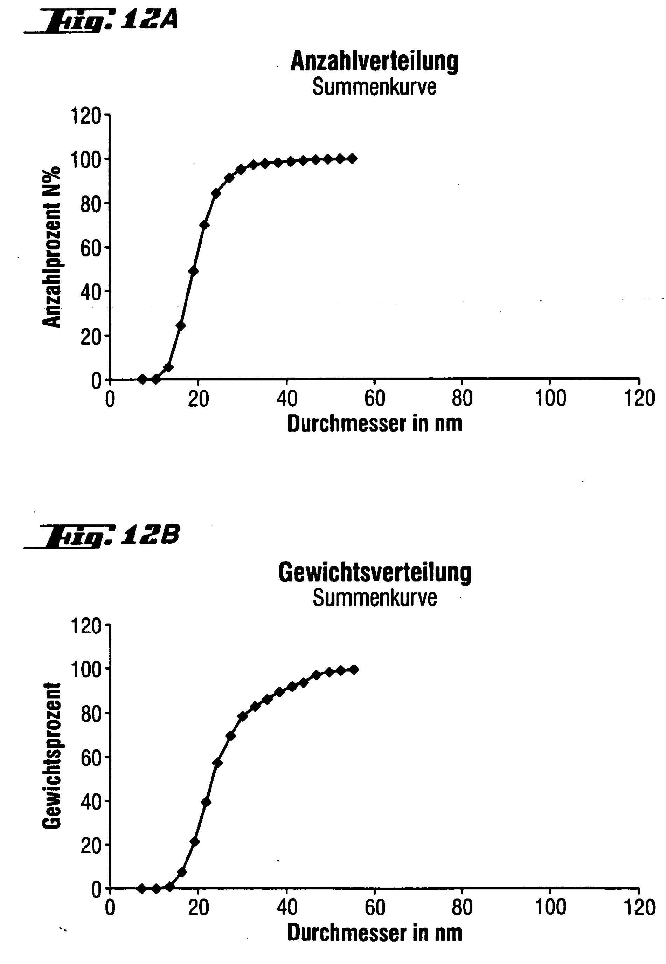

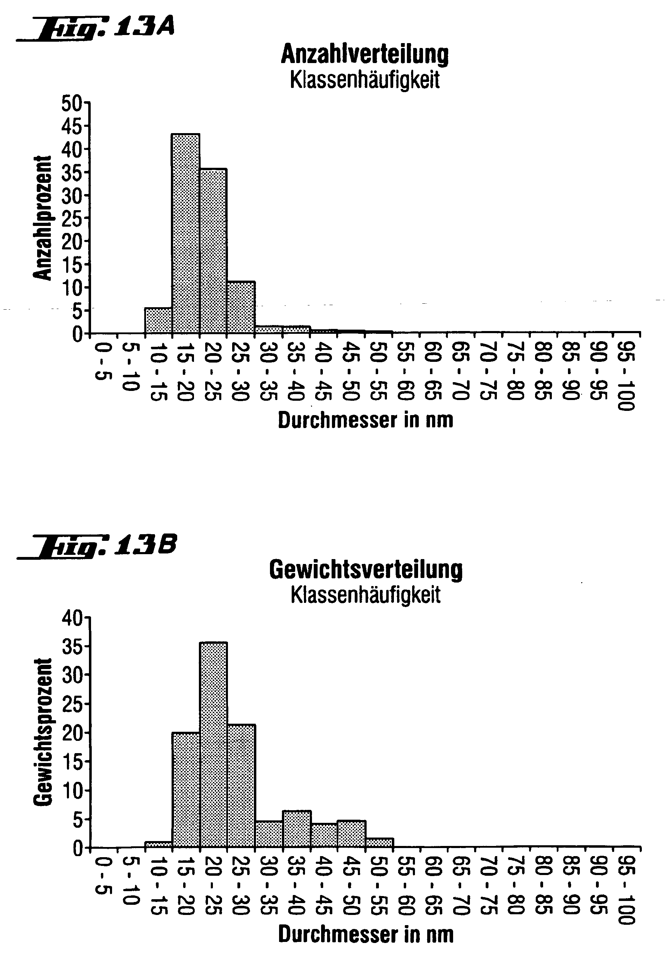

Die Tabelle 4 zeigt die Ergebnisse der Teilchenauszählung der Pulver des Beispiels 7 mittels der EM-Aufnahme. Diese Werte sind in den Figuren 11 bis 13 graphisch dargestellt.

Tabelle 4

| | |
|---|---|
| Gesamtzahl der gemessenen Teilchen N: | 4259 |
| Teilchendurchmesser, arithmetisches Mittel DN: | 20,993 nm |
| Teilchendurchmesser, über die Oberfläche gemittelt DA: | 24,270 nm |
| Teilchendurchmesser, über das Volumen gemittelt DV: | 26,562 nm |
| Teilchendurchmesser, Standardabweichung S: | 5,537 nm |
| Teilchendurchmesser, Variationskoeffizient V: | 26,374 |
| spezifische Oberfläche OEM: | 112, 370 qm/g |
| Medianwert Anzahlverteilung D50(A): | 18,740 nm |
| Medianwert Gewichtsverteilung D50 (g) : | 23,047 nm |
| 90 %-Spanne Anzahlverteilung: | 12,615 nm - 29,237 nm |
| 90 %-Spanne Gewichtsverteilung: | 14,686 nm - 44,743 nm |
| Gesamtspanne: | 7,400 nm - 55,000 nm |

| Durchmesser D | Anzahl N | Anzahl % N % | Summe Anzahl % | Gewichts % ND3 % | Summe Gewichts % |
|---|---|---|---|---|---|
| 7,400 | 1 | 0,023 | 0,023 | 0,001 | 0,001 |
| 10,200 | 11 | 0,258 | 0,282 | 0,024 | 0,025 |
| 13,000 | 233 | 5,471 | 5,753 | 1,051 | 1,075 |
| 15,800 | 805 | 18,901 | 24,654 | 6,517 | 7,592 |
| 18,600 | 1034 | 24,278 | 48,932 | 13,656 | 21,248 |
| 21,400 | 913 | 21,437 | 70,369 | 18,364 | 39,613 |
| 24,200 | 607 | 14,252 | 84,621 | 17,656 | 57,269 |
| 27,000 | 311 | 7,302 | 91,923 | 12,564 | 69,833 |
| 29,800 | 164 | 3,851 | 95,774 | 8,908 | 78,740 |
| 32,600 | 63 | 1,479 | 97,253 | 4,480 | 83,220 |
| 35,400 | 35 | 0,822 | 98,075 | 3,187 | 86,407 |
| 38,200 | 28 | 0,657 | 98,732 | 3,203 | 89,610 |
| 41,000 | 18 | 0,423 | 99,155 | 2,546 | 92,156 |
| 43,800 | 10 | 0,235 | 99,390 | 1,725 | 93,881 |
| 46,600 | 16 | 0,376 | 99,765 | 3,323 | 97,204 |
| 49,400 | 5 | 0,117 | 99,883 | 1,237 | 98,441 |
| 52,200 | 3 | 0,070 | 99,953 | 0,876 | 99,317 |
| 55,000 | 2 | 0,047 | 100,000 | 0,683 | 100,000 |

**Patentansprüche**

1. Mittels Aerosol mit Kalium dotierte pyrogen hergestellte Oxide von Metallen oder Metalloiden, **dadurch gekennzeichnet, daß** die Basiskomponente ein pyrogen nach der Art der Flammenoxidation oder bevorzugt der Flammenhydrolyse hergestelltes Oxid ist, das mit Kalium von mehr als 0,03 bis 20 Gew.-% dotiert ist, wobei die Dotierungsmenge vorzugsweise im Bereich von 500 bis 20.000 ppm liegt und die Dotierungskomponente ein Salz des Kaliums ist, und die BET-Oberfläche des dotierten Oxids zwischen 1 und 1000 m$^2$/g liegt und die Breite der Teilchengrößenverteilung mindestens 0,7 beträgt.

2. Mittels Aerosol mit Kalium dotierte pyrogen hergestellte Oxide von Metallen oder Metalloiden gemäß Anspruch 1, **dadurch gekennzeichnet, daß** die Basiskomponente ein pyrogen nach der Art der Flammenoxidation oder bevorzugt der Flammenhydrolyse hergestelltes Oxid ist, das mit Kalium von mehr als 0,03 bis 20 Gew.-% dotiert ist, wobei die Dotierungsmenge vorzugsweise im Bereich von 500 bis 20.000 ppm liegt und der pH-Wert des dotierten pyrogenen Oxids gemessen in einer 4-prozentigen wäßrigen Dispersion mehr als 5 beträgt, und die BET-Oberfläche des dotierten Oxids zwischen 1 und 1000 m$^2$/g liegt.

3. Mittels Aerosol mit Kalium dotierte pyrogen hergestellte Oxide von Metallen oder Metalloiden gemäß Anspruch 1, **dadurch gekennzeichnet, daß** die Basiskomponente ein pyrogen nach der Art der Flammenoxidation oder bevorzugt der Flammenhydrolyse hergestelltes Oxid ist, das mit Kalium von mehr als 0,03 bis 20 Gew.-% dotiert ist, wobei die Dotierungsmenge vorzugsweise im Bereich von 500 bis 20.000 ppm liegt und Dibutylphtalatabsorption keinen Endpunkt erkennen läßt, und die BET-Oberfläche des dotierten Oxids zwischen 1 und 1000 m$^2$/g liegt

4. Verfahren zur Herstellung von Metallen und/oder Metalloidum mittels Aerosol mit Kalium dotierten pyrogenen Oxiden gemäß Anspruch 1, **dadurch gekennzeichnet, daß** man in eine Flamme, wie sie zur Herstellung von pyrogenen Oxiden nach der Art der Flammenoxidation oder bevorzugt der der Flammenhydrolyse benutzt wird, ein Aerosol hergestellt aus einer Kaliumsalz-Lösung mit einem Gehalt an Kaliumchlorid von größer 0.5 Gew.-% Kalium einspeist, dieses Aerosol vor der Reaktion mit dem Gasgemisch der Flammenoxidation beziehungsweise Flammenhydrolyse homogen mischt dann das Aerosol-Gasgemisch in einer Flamme abreagieren läßt und die entstandenen pyrogenen mit Kalium dotierten Oxide in bekannter Weise vom Gasstrom abtrennt, wobei als Ausgangsprodukt des Aerosols eine Kaliumsalzlösung dient, die das Kaliumsalz enthält, wobei man das Aerosol durch Vernebelung durch einen Aerosolgenerator vorzugsweise nach der Zweistoffdüsenmethode herstellt.

5. Verwendung der mittels Aerosol mit Kalium dotierten pyrogenen Oxide gemäß Anspruch 1 als Füllstoff, als Trägermaterial, als katalytisch aktive Substanz, als Ausgangsmaterial zur Herstellung von Dispersionen, als Poliermaterial (CMP-Anwendungen), als keramischen Grundstoff, in der Elektronikindustrie, in der Kosmetikindustrie, als Additiv in der Silikon- und Kautschukindustrie, zur Einstellung der Rheologie von flüssigen Systemen, zur Hitzeschutzstabilisierung, in der Lackindustrie.

## Claims

1. Pyrogenically produced oxides of metals or metalloids which oxides are doped by means of aerosol with potassium, **characterized in that** the base component is an oxide that is pyrogenically produced in the manner of flame oxidation or preferably of flame hydrolysis and is doped with potassium from more than 0.03 to 20% by wt. and the doping amount is preferably in a range of from 500 to 20,000 ppm and the doping component is a salt of potassium, and the BET surface of the doped oxide is between 1 and 1000 m$^2$/g and the breadth of the distribution of particle size is at least 0.7.

2. Pyrogenically produced oxides of metals or metalloids which oxides are doped by means of aerosol with potassium according to Claim 1, **characterized in that** the base component is an oxide that is pyrogenically produced in the manner of flame oxidation or preferably of flame hydrolysis and is doped with potassium from more than 0.03 to 20% by wt., and the doping amount is preferably in a range of from 500 to 20,000 ppm and the pH of the doped, pyrogenic oxide is more than 5, measured in a 4% aqueous dispersion, and the BET surface of the doped oxide is between 1 and 1000 m$^2$/g.

3. Pyrogenically produced oxides of metals or metalloids which oxides are doped by means of aerosol with potassium according to Claim 1, **characterized in that** the base component is an oxide that is pyrogenically produced in the manner of flame oxidation or preferably of flame hydrolysis and is doped with potassium from more than 0.03 to 20% by wt., and the doping amount is preferably in a range of from 500 to 20,000 ppm and the absorption of dibutylphthalate does not allow any end point to be recognized, and the BET surface of the doped oxide is between 1 and 1000 m$^2$/g.

4. Method of producing pyrogenic oxides of metals and/or metalloids which oxides are doped by means of aerosol with potassium according to Claim 1, **characterized in that** an aerosol produced from a potassium salt solution and a content of potassium chloride of greater than 0.5% by weight of potassium is fed into a flame like the one used to produce pyrogenic oxides in the manner of flame oxidation or preferably of flame hydrolysis, that this aerosol is homogeneously mixed before the reaction with the gaseous mixture of flame oxidation or flame hydrolysis, then the aerosol-gaseous mixture is allowed to react in a flame and the pyrogenic, potassium-doped oxides produced are separated in a known manner from the gas flow, and a potassium salt solution containing the potassium salt serves as starting product of the aerosol and the aerosol is produced by atomization by means of an aerosol generator preferably in accordance with the two-fluid nozzle method.

5. Use of pyrogenic oxides doped with potassium by means of aerosol according to Claim 1 as filler, carrier material, catalytically active substance, starting material for producing dispersions, as polishing material (CMP applications), base ceramic material, in the electronic industry, in the cosmetic industry, as additive in the silicon industry and rubber industry, for adjusting the rheology of liquid systems, for the stabilization of heat protection and in the paint industry.

**Revendications**

1. Oxydes de métaux ou de métalloïdes fabriqués par voie pyrogène, dopées de potassium à l'aide d'un aérosol, **caractérisés en ce que** le composant de base est un oxyde fabriqué par voie pyrogène, conformément à l'art de l'oxydation à la flamme ou, de préférence, de l'hydrolyse à la flamme, qui est dopé de potassium à raison de plus de 0,03 à 20% en poids, la quantité de dopage se situant, de préférence, dans le domaine de 500 à 20 000 ppm et le composant de dopage étant un sel de potassium, et la surface BET de l'oxyde dopé se situant entre 1 et 1000 m$^2$/g et la largeur de la distribution granulométrique des particules étant d'au moins 0,7.

2. Oxydes de métaux ou de métalloïdes fabriqués par voie pyrogène, dopées de potassium à l'aide d'un aérosol, selon la revendication 1, **caractérisés en ce que** le composant de base est un oxyde fabriqué par voie pyrogène conformément à l'art de l'oxydation à la flamme ou, de préférence, de l'hydrolyse à la flamme, qui est dopé de potassium à raison de plus de 0,03 à 20% en poids, la quantité de dopage se situant, de préférence, dans le domaine de 500 à 20 000 ppm et la valeur de pH de l'oxyde pyrogène dopé, mesurée dans une dispersion aqueuse à 4 pour cent, étant de plus de 5 et la surface BET de l'oxyde dopé se situant entre 1 et 1000 m$^2$/g.

3. Oxydes de métaux ou de métalloïdes fabriqués par voie pyrogène, dopées de potassium à l'aide d'un aérosol, selon la revendication 1, **caractérisé en ce que** le composant de base est un oxyde fabriqué par voie pyrogène conformément à l'art de l'oxydation à la flamme ou, de préférence, de l'hydrolyse à la flamme, qui est dopé de potassium à raison de plus de 0,03 à 20% en poids, la quantité de dopage se situant, de préférence, dans le domaine de 500 à 20 000 ppm et l'absorption de phtalate de dibutyle ne laissant reconnaître aucun point final et la surface BET de l'oxyde dopé se situant entre 1 et 1000 m$^2$/g.

4. Procédé en vue de la fabrication d'oxydes de métaux ou de métalloïdes pyrogènes, dopés de potassium à l'aide d'un aérosol selon la revendication 1, **caractérisé en ce que** l'on injecte dans une flamme, comme on l'utilise en vue de la fabrication d'oxydes pyrogènes conformément à l'art de l'oxydation à la flamme ou, de préférence, de l'hydrolyse à la flamme, un aérosol fabriqué à partir d'une solution de sel de potassium, ayant une teneur en chlorure de potassium supérieure à 0,5% en poids de potassium, **en ce que** l'on mélange, avant la réaction, de manière homogène, cet aérosol avec le mélange de gaz de l'oxydation à la flamme, respectivement de l'hydrolyse à la flamme, **en ce que** l'on laisse alors le mélange gazeux d'aérosol réagir complètement dans une flamme et **en ce que** l'on sépare les oxydes pyrogènes dopés de potassium obtenus d'une manière connue du courant gazeux, une solution de sel de potassium, qui contient le sel de potassium, servant de produit de départ de l'aérosol, l'aérosol étant produit par nébulisation à l'aide d'un générateur d'aérosols, de préférence, conformément au procédé à buse pour deux substances.

5. Utilisation des oxydes pyrogènes dopés de potassium à l'aide d'un aérosol, selon la revendication 1, en tant que charge, en tant que matériau de support, en tant que substance active du point de vue catalytique, en tant que matériau de départ en vue de la fabrication de dispersions, en tant que matériau de polissage (applications CMP), en tant que substance céramique de base, dans l'industrie électronique, dans l'industrie cosmétique, en tant qu'additif dans l'industrie des silicones et du caoutchouc, en vue du réglage de la rhéologie de systèmes fluides, en vue de la stabilisation de protection thermique, dans l'industrie des laques.

500 nm

Fig. 1

500 nm

Fig. 2

## Fig. 3

# Fig. 4

1 µm

*Fig. 5*

500 nm

Fig. 6

500 nm

*Fig. 1*

## *Fig. 8A*

### Anzahlverteilung
### differentiell

## *Fig. 8B*

### Gewichtsverteilung
### differentiell

*Fig.* **9A**

**Anzahlverteilung**
Summenkurve

**Durchmesser in nm**

*Fig.* **9B**

**Gewichtsverteilung**
Summenkurve

**Durchmesser in nm**

## Fig. 10A

**Anzahlverteilung**
Klassenhäufigkeit

## Fig. 10B

**Gewichtsverteilung**
Klassenhäufigkeit

## Fig. 11A

**Anzahlverteilung**
differentiell

## Fig. 11B

**Gewichtsverteilung**
differentiell

## Fig. 12A

### Anzahlverteilung
Summenkurve

## Fig. 12B

### Gewichtsverteilung
Summenkurve

## Fig. 13A

**Anzahlverteilung**
Klassenhäufigkeit

Durchmesser in nm

## Fig. 13B

**Gewichtsverteilung**
Klassenhäufigkeit

Durchmesser in nm